# EUROPEAN PATENT APPLICATION

(11) **EP 3 547 587 A1**
(43) Date of publication of application: **02.10.2019**
(21) Application number: 17854620.6
(22) Date of filing: 26.08.2017
(51) Int. Cl.: H04L 5/00, H04W 28/20

(54) **DATA TRANSMISSION METHOD, NETWORK EQUIPMENT, AND TERMINAL EQUIPMENT**

(30) Priority: 28.09.2016 CN 201610857384; 10.02.2017 CN 201710074285
(71) Applicant: Huawei Technologies Co., Ltd., Longgang District Shenzhen, Guangdong 518129 (CN)
(72) Inventor: ZHU, Jun, Shenzhen Guangdong 518129 (CN); ZHANG, Jiayin, Shenzhen Guangdong 518129 (CN); PANG, Jiyong, Shenzhen Guangdong 518129 (CN)
(74) Representative: Thun, Clemens
(86) International application number: PCT/CN2017/099206
(87) International publication number: WO 2018/059168

(57) **Abstract**

The present invention provides a data transmission method, a network device, and a terminal device. The method includes: generating first control signaling, where the first control signaling is used to indicate a transmission bandwidth in a basic time unit, a frequency resource corresponding to the basic time unit includes at least one frequency segment, and the transmission bandwidth is a bandwidth of some or all of the at least one frequency segment; and sending the first control signaling to a terminal device. According to the method, the network device, and the terminal device provided in the present invention, the first control signaling used to indicate the transmission bandwidth in the basic time unit is sent to the terminal device, so that system efficiency can be improved.

## Description

### TECHNICAL FIELD

The present invention relates to the communications field, and more specifically, to a data transmission method, a network device, and a terminal device.

### BACKGROUND

The third generation partner project (3rd Generation Partner Project, "3GPP" for short) proposes a heterogeneous network (Heterogeneous Network, "HetNet" for short) architecture. In other words, a large quantity of home eNodeBs (Home eNodeB, "HeNB" for short) are deployed in coverage of a macro cell to increase a system capacity, to meet a rapidly increasing traffic requirement. However, only improving spectral efficiency and deploying more small-sized base stations can hardly fully cope with a challenge of a thousands of fold increase in traffic. In recent years, to promote wireless broadband development, a large quantity of unlicensed spectrum resources are made available worldwide. If a cellular network technology with high reliability and performance can be used to effectively utilize the large quantity of idle and free unlicensed frequency resources, pressure of the frequency resources can be greatly alleviated.

A licensed-assisted access (Licensed-Assisted Access, "LAA" for short) technology is an implementation solution of introducing an LTE technology into an unlicensed spectrum. To be specific, all LTE control channels and data channels in a licensed frequency band continue to be used. In addition, channel bonding between a primary cell and a secondary cell is implemented in a carrier aggregation (Carrier Aggregation, "CA" for short) manner. CA (Carrier Aggregation, carrier aggregation) means that a base station aggregates two or more carriers based on a UE capability, to support a larger transmission bandwidth. Each aggregated carrier is referred to as a component carrier (Component Carrier, "CC" for short).

A system deployed on the unlicensed spectrum may be interfered with by a coexisting system, for example, Bluetooth or a wireless local area network (Wireless Local Area Network, "WLAN" for short).

Therefore, a station that is to transmit data needs to first perform listen before talk (Listen before Talk, "LBT" for short), to be specific, listen on a channel to determine whether the channel is idle, to determine whether another station is transmitting data on the channel. If the channel is idle, the station may transmit data; otherwise, the station makes an attempt again after an avoidance period. An actual bandwidth for each transmission is flexible due to the LBT. When sub-band interference exists, the base station does not transmit data on an interfered serving cell (serving cell). However, the station does not know the interference, and still performs PDCCH blind detection on the interfered serving cell. Therefore, system efficiency is reduced.

### SUMMARY

Embodiments of the present invention provide a data transmission method and an apparatus, to improve system efficiency.

According to one aspect, a data transmission method is provided. The method includes: generating, by a network device, first control signaling, where the first control signaling is used to indicate a transmission bandwidth in a basic time unit, a frequency resource corresponding to the basic time unit includes at least one frequency segment, and the transmission bandwidth is a bandwidth of some or all of the at least one frequency segment; and sending the first control signaling to a terminal device.

In this embodiment of the present invention, the network device sends, to the terminal device, the first control signaling used to indicate the transmission bandwidth in the basic time unit, so that system efficiency can be improved.

In a possible design, the frequency resource corresponding to the basic time unit includes a plurality of frequency segments, the transmission bandwidth is a bandwidth of some or all of the plurality of frequency segments, the basic time unit includes a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment; and the sending the first control signaling to a terminal device includes: sending the first control signaling to the terminal device in the first time segment.

In this embodiment of the present invention, a guard interval subcarrier does not exist between at least some available frequency segments of the transmission bandwidth in the second time segment of the basic time unit, so that a frequency resource occupied by the guard interval subcarrier is effectively utilized, thereby further improving the system efficiency.

In a possible design, the sending the first control signaling to the terminal device in the first time segment includes: sending the first control signaling to the terminal device on each frequency segment of the transmission bandwidth in the first time segment.

In a possible design, the first time segment includes a control region, and the second time segment includes a data region.

In this embodiment of the present invention, a guard interval subcarrier does not exist between at least some available frequency segments of the transmission bandwidth in the data region of the basic time unit, so that a frequency resource occupied by the guard interval subcarrier is effectively utilized, thereby further improving the system efficiency.

In a possible design, the first time segment includes a control region, the control region includes a first control region and a second control region, the first control region is before the second control region, and the second time segment includes a data region.

In this embodiment of the present invention, a guard interval subcarrier does not exist between at least some available frequency segments of the transmission bandwidth in the data region of the basic time unit, so that a frequency resource occupied by the guard interval subcarrier is effectively utilized, thereby further improving the system efficiency.

In a possible design, the first time segment includes a first control region of a control region, and the second time segment includes a second control region of the control region and a data region.

In this embodiment of the present invention, a guard interval subcarrier does not exist between at least some available frequency segments of the transmission bandwidth in the second control region and the data region of the basic time unit, so that a frequency resource occupied by the guard interval subcarrier is effectively utilized, thereby further improving the system efficiency.

In a possible design, quantities of orthogonal frequency division multiplexing OFDM symbols in the second control region are the same or different in different frequency segments.

In a possible design, the sending the first control signaling to the terminal device in the first time segment includes: sending the first control signaling to the terminal device in the first control region, where the first control region is one OFDM symbol.

In a possible design, the first control signaling is further used to indicate a quantity of OFDM symbols in the control region or a quantity of OFDM symbols in the second control region.

In a possible design, the data transmission method further includes: sending second control signaling to the terminal device in the first control region or the second control region, where the second control signaling is used to indicate the quantity of OFDM symbols in the control region or the quantity of OFDM symbols in the second control region.

In a possible design, the sending second control signaling to the terminal device in the first control region or the second control region includes: sending the second control signaling to the terminal device on each frequency segment of the transmission bandwidth in the first control region or the second control region.

In a possible design, the data transmission method further includes: sending second control sub-signaling to the terminal device on each frequency segment of the transmission bandwidth in the first control region or the second control region, where the second control sub-signaling sent on each frequency segment is used to indicate a quantity of OFDM symbols in the control region in the corresponding frequency segment or a quantity of OFDM symbols in the second control region in the corresponding frequency segment.

In a possible design, the data transmission method further includes: sending third control signaling to the terminal device in the first control region or the second control region, where the third control signaling is used to indicate scheduling information of the terminal device.

In a possible design, the sending third control signaling to the terminal device in the first control region or the second control region includes: sending the third control signaling to the terminal device on each frequency segment of the transmission bandwidth in the first control region or the second control region, where the third control signaling sent on each frequency segment is used to indicate scheduling information of the terminal device on the corresponding frequency segment.

In a possible design, the data transmission method further includes: performing data transmission with the terminal device based on the transmission bandwidth in the data region.

In a possible design, the data transmission method further includes: sending a reference signal to the terminal device on an interval subcarrier between the frequency segments of the transmission bandwidth in the second time segment, where the interval subcarrier is a subcarrier corresponding to the guard interval subcarrier in the first time segment.

In a possible design, the basic time unit includes a subframe, a transmission time interval, or a slot.

In a possible design, the first control signaling is used to indicate a transmission bandwidth in a plurality basic time units starting from the basic time unit.

In some possible implementations, the method further includes: sending feedback information corresponding to a physical uplink shared channel PUSCH to the terminal device on each frequency segment of the transmission bandwidth in the first control region or the second control region.

In some possible designs, different basic time units may include same or different subcarrier spacings.

In some possible designs, the frequency segments in the second time segment use same or different subcarrier spacings.

In some possible designs, a guard interval subcarrier is not included between contiguous frequency segments of the transmission bandwidth, and a guard interval subcarrier exists between non-contiguous available frequency segments.

In some possible designs, a guard interval subcarrier is not included between non-contiguous frequency segments of the transmission bandwidth.

According to another aspect, a network device is provided. The network device includes modules configured to perform the foregoing network device-based data transmission method. Based on a same inventive concept, because a problem resolution principle of the network device corresponds to the solutions in the method designs in the first aspect, for an implementation of the network device, refer to the implementation of the method. Details are not described again.

According to still another aspect, a network device is provided. The network device includes a transceiver, a memory, and a processor. The transceiver, the memory, and the processor are connected by using a system bus. The memory is configured to store an instruction. The processor is configured to execute the instruction stored in the memory. When the program is executed, the processor is configured to perform the foregoing network device-based data transmission method.

According to still another aspect, a data transmission method is provided. The method includes: receiving, by a terminal device, first control signaling sent by a network device, where the first control signaling is used to indicate a transmission bandwidth in a basic time unit, a frequency resource corresponding to the basic time unit includes at least one frequency segment, and the transmission bandwidth is a bandwidth of some or all of the at least one frequency segment; and performing, by the terminal device, data transmission with the network device based on the transmission bandwidth.

In this embodiment of the present invention, the terminal device receives the first control signaling that is sent by the network device and that is used to indicate the transmission bandwidth in the basic time unit, so that system efficiency can be improved.

In a possible design, the frequency resource corresponding to the basic time unit includes a plurality of frequency segments, the transmission bandwidth is a bandwidth of some or all of the plurality of frequency segments, the basic time unit includes a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment; and the receiving, by a terminal device, first control signaling sent by a network device includes: receiving, by the terminal device in the first time segment, the first control signaling sent by the network device.

In a possible design, a guard interval subcarrier does not exist between at least some available frequency segments of the transmission bandwidth in the second time segment of the basic time unit, so that a frequency resource occupied by the guard interval subcarrier is effectively utilized, thereby further improving the system efficiency.

In a possible design, the receiving, by a terminal device, first control signaling sent by a network device includes: receiving, by the terminal device, the first control signaling on a primary frequency segment, where the primary frequency segment of the terminal device is a frequency segment of the transmission bandwidth.

In a possible design, primary frequency segments of different terminal devices are the same or different.

In a possible design, the first time segment includes a control region, and the second time segment includes a data region.

In this embodiment of the present invention, a guard interval subcarrier does not exist between at least some available frequency segments of the transmission bandwidth in the data region of the basic time unit, so that a frequency resource occupied by the guard interval subcarrier is effectively utilized, thereby further improving the system efficiency.

In a possible design, the first time segment includes a control region, the control region includes a first control region and a second control region, the first control region is before the second control region, and the second time segment includes a data region.

In this embodiment of the present invention, a guard interval subcarrier does not exist between at least some available frequency segments of the transmission bandwidth in the data region of the basic time unit, so that a frequency resource occupied by the guard interval subcarrier is effectively utilized, thereby further improving the system efficiency.

In a possible design, the first time segment includes a first control region of a control region, and the second time segment includes a second control region of the control region and a data region.

In this embodiment of the present invention, a guard interval subcarrier does not exist between at least some available frequency segments of the transmission bandwidth in the second control region and the data region of the basic time unit, so that a frequency resource occupied by the guard interval subcarrier is effectively utilized, thereby further improving the system efficiency.

In a possible design, quantities of orthogonal frequency division multiplexing OFDM symbols in the second control region are the same or different in different frequency segments.

In a possible design, the receiving, by a terminal device, first control signaling sent by a network device includes: receiving, by the terminal device, the first control signaling in the first control region, where the first control region is one OFDM symbol.

In a possible design, the first control signaling is further used to indicate a quantity of OFDM symbols in the control region or a quantity of OFDM symbols in the second control region.

In a possible design, the data transmission method further includes: receiving, by the terminal device in the first control region or the second control region, second control signaling sent by the network device, where the second control signaling is used to indicate the quantity of OFDM symbols in the control region or the quantity of OFDM symbols in the second control region.

In a possible design, the receiving, by the terminal device in the first control region or the second control region, second control signaling sent by the network device includes: receiving, by the terminal device on each frequency segment of the transmission bandwidth in the first control region or the second control region, the second control signaling sent by the network device.

In a possible design, the data transmission method further includes: receiving, by the terminal device on each frequency segment of the transmission bandwidth in the first control region or the second control region, second control sub-signaling sent by the network device, where the second control sub-signaling received on each frequency segment is used to indicate a quantity of OFDM symbols in the control region in the corresponding frequency segment or a quantity of OFDM symbols in the second control region in the corresponding frequency segment.

In a possible design, the data transmission method further includes: receiving, by the terminal device in the first control region or the second control region, third control signaling sent by the network device, where the third control signaling is used to indicate scheduling information of the terminal device.

In a possible design, the receiving, by the terminal device in the first control region or the second control region, third control signaling sent by the network device includes: receiving, by the terminal device on each frequency segment of the transmission bandwidth in the first control region or the second control region, the third control signaling sent by the network device, where the third control signaling received on each frequency segment is used to indicate scheduling information of the terminal device on the corresponding frequency segment.

In a possible design, the performing, by the terminal device, data transmission with the network device based on the transmission bandwidth includes: determining, by the terminal device based on the third control signaling, a resource block RB resource allocated by the network device to the terminal device; performing, by the terminal device, listen before talk detection on a frequency segment on which the RB resource is located; and performing, by the terminal device, uplink transmission based on the transmission bandwidth if the LBT detection succeeds, where a subcarrier corresponding to the RB resource is an available subcarrier for uplink transmission of the terminal device, and another subcarrier in the transmission bandwidth is a null subcarrier.

In this embodiment of the present invention, the subcarrier corresponding to the resource block RB resource allocated by the network device to the terminal device is the available subcarrier for uplink transmission of the terminal device, and the another subcarrier in the transmission bandwidth is the null subcarrier. In other words, a guard interval subcarrier does not exist between at least some available frequency segments of the transmission bandwidth, so that a frequency resource occupied by the guard interval subcarrier is effectively utilized, thereby further improving the system efficiency.

In a possible design, the data transmission method further includes: receiving, by the terminal device on an interval subcarrier between the frequency segments of the transmission bandwidth in the second time segment, a reference signal sent by the network device, where the interval subcarrier is a subcarrier corresponding to the guard interval subcarrier in the first time segment.

In a possible design, the basic time unit includes a subframe, a transmission time interval, or a slot.

In a possible design, the first control signaling is used to indicate a transmission bandwidth in a plurality basic time units starting from the basic time unit.

In some possible designs, the data transmission method further includes: sending feedback information corresponding to a physical uplink shared channel PUSCH to the terminal device on each frequency segment of the transmission bandwidth in the first control region or the second control region.

According to still another aspect, a terminal device is provided. The terminal device includes modules configured to perform the foregoing terminal device-based data transmission method. Based on a same inventive concept, because a problem resolution principle of the terminal device corresponds to the solutions in the method designs in the second aspect, for an implementation of the terminal device, refer to the implementation of the method. Details are not described again.

According to still another aspect, a terminal device is provided. The terminal device includes a transceiver, a memory, and a processor. The transceiver, the memory, and the processor are connected by using a system bus. The memory is configured to store an instruction. The processor is configured to execute the instruction stored in the memory. When the program is executed, the processor is configured to perform the foregoing terminal device-based data transmission method.

### DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may derive other drawings from these accompanying drawings without creative efforts.
FIG. 1 is a schematic diagram of a downlink subframe in a long term evolution system according to an embodiment of the present invention;
FIG. 2 is a schematic flowchart of a data transmission method according to an embodiment of the present invention;
FIG. 3 is a schematic diagram of a basic time unit according to an embodiment of the present invention;
FIG. 4 is a schematic diagram of a basic time unit according to another embodiment of the present invention;
FIG. 5 is a schematic diagram of a basic time unit according to still another embodiment of the present invention;
FIG. 6 is a schematic diagram of a basic time unit according to still another embodiment of the present invention;
FIG. 7 is a schematic diagram of a transmission bandwidth in a second time segment according to an embodiment of the present invention;
FIG. 8 is a schematic diagram of a transmission bandwidth in a first time segment according to an embodiment of the present invention;
FIG. 9 is a schematic diagram of a transmission bandwidth according to an embodiment of the present invention;
FIG. 10 is a schematic diagram of a transmission bandwidth according to another embodiment of the present invention;
FIG. 11 is a schematic diagram of a location of a guard interval subcarrier in a transmission bandwidth according to an embodiment of the present invention;
FIG. 12 is a schematic diagram of a location of a guard interval subcarrier in a transmission bandwidth according to another embodiment of the present invention;
FIG. 13 is a schematic diagram of quantities of OFDM symbols in a second control region of a basic time unit in different frequency segments according to an embodiment of the present invention;
FIG. 14 is a schematic diagram of LBT detection according to an embodiment of the present invention;
FIG. 15 is a schematic diagram of an uplink subframe configuration according to an embodiment of the present invention;
FIG. 16 is a schematic block diagram of combining a data transmission method and a carrier aggregation method according to an embodiment of the present invention;
FIG. 17 is a schematic block diagram of a data transmission network device according to an embodiment of the present invention;
FIG. 18 is a schematic block diagram of a data transmission terminal device according to an embodiment of the present invention;
FIG. 19 is a schematic block diagram of a data transmission network device according to another embodiment of the present invention;
FIG. 20 is a schematic block diagram of a data transmission terminal device according to another embodiment of the present invention;
FIG. 21 is a schematic diagram of a basic time unit according to still another embodiment of the present invention;
FIG. 22 is a schematic diagram of a basic time unit according to still another embodiment of the present invention;
FIG. 23 is a schematic diagram of a basic time unit according to still another embodiment of the present invention;
FIG. 24 is a schematic diagram of a basic time unit according to still another embodiment of the present invention; and
FIG. 25 is a schematic diagram of a basic time unit according to still another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

It should be understood that the embodiments of the present invention are described by using a long term evolution (Long Term Evolution, "LTE" for short) system as an example, but the present invention is not limited thereto. In other words, the technical solutions in the embodiments of the present invention may be applied to various communications systems, for example, a global system for mobile communications (Global System of Mobile communication, "GSM" for short), a code division multiple access (Code Division Multiple Access, "CDMA" for short) system, a wideband code division multiple access (Wideband Code Division Multiple Access, "WCDMA" for short) system, a general packet radio service (General Packet Radio Service, "GPRS" for short), a 5G communications system, an LTE frequency division duplex (Frequency Division Duplex, "FDD" for short) system, an LTE time division duplex (Time Division Duplex, "TDD" for short) system, and a universal mobile telecommunications system (Universal Mobile Telecommunications System, "UMTS" for short).

The embodiments of the present invention are described with reference to the network device and the terminal device. The terminal device may also be referred to as user equipment (User Equipment, UE), an access terminal, a subscriber unit, a subscriber station, a mobile station, a mobile console, a remote station, a remote terminal, a mobile device, a user terminal, a terminal, a wireless communications device, a user agent, a user apparatus, or the like. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA for short), a handheld device having a wireless communication function, a computing device, another processing device connected to a wireless modem, a vehicle-mounted device, a wearable device, a terminal device in a future 5G network, or a terminal device in a future evolved PLMN.

The network device may be a device configured to communicate with a terminal device. The network device may include a base station or a network side device that has a base station function. For example, the network device may be a base transceiver station (Base Transceiver Station, BTS) in a GSM or CDMA system, or may be a NodeB (NodeB, NB) in a WCDMA system, or may be an evolved NodeB (Evolved NodeB, eNB or eNodeB) in an LTE system, or the network device may be a relay station, an access point, a vehicle-mounted device, a wearable device, a network side device in a future 5G network, or the like.

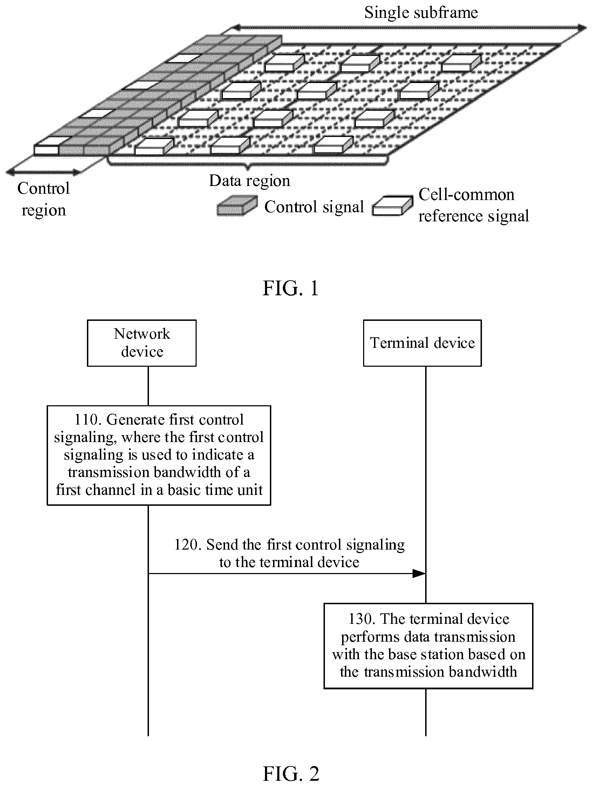

FIG. 1 is a schematic diagram of division of a downlink subframe in a long term evolution system according to an embodiment of the present invention. As shown in FIG. 1, each downlink subframe in the LTE system is divided into two parts: a control region (control region) and a data region (data region).

To support uplink and downlink data transmission, some related downlink control signaling is defined. The control region is mainly used to transmit the downlink control signaling, including:
(1) A physical control format indicator channel (Physical Control Format Indicator Channel, "PCFICH" for short) is used to notify user equipment (User Equipment, "UE" for short) of a size of a corresponding control region of the downlink subframe, that is, a quantity of OFDM symbols in the control region.
(2) A physical hybrid automatic repeat request indicator channel (Physical Hybrid ARQ Indicator Channel, "PHICH" for short) is used to respond to data transmitted on a physical uplink shared channel (Physical Uplink Shared Channel, "PUSCH" for short) with a hybrid automatic repeat request (Hybrid Automatic Repeat Request, "HARQ" for short) acknowledgment (Acknowledgment, "ACK" for short)/negative acknowledgment (Negative Acknowledgment, "NACK" for short).
(3) A physical downlink control channel (Physical Downlink Control Channel, "PDCCH" for short) is used to send downlink scheduling information to UE, so that the UE receives a PDSCH; and send uplink scheduling information to the UE, so that the UE sends a PUSCH, and the like. Information carried on the PDCCH is referred to as downlink control information (Downlink Control Information, "DCI" for short). Downlink DCI includes a DCI format (DCI format) 1/1A/1B/1C/1D/2/2A/2B/2C; and uplink DCI includes a DCI format 0/4. The downlink DCI or the uplink DCI is sent to the UE through a downlink PDCCH. The UE does not know in advance which format of DCI is carried on the received PDCCH. Therefore, the UE needs to perform a PDCCH blind detection to receive corresponding DCI. When non-carrier aggregation is used, that is, when the UE has only one serving cell, a total quantity of times of PDCCH blind detection performed by the UE does not exceed 44. When carrier aggregation such as LAA is used, the UE needs to perform PDCCH blind detection on a primary serving cell PCell and an activated secondary serving cell SCell. In this case, a maximum quantity of times of blind detection to be performed is 44+32*n, and n is a quantity of activated SCells.

The data region is mainly used to transmit data, including: a physical broadcast channel (Physical Broadcast Channel, "PBCH" for short), a physical downlink shared channel (Physical Downlink Shared Channel, "PDSCH" for short), and a physical multicast channel (Physical Multicast Channel, "PMCH" for short).

In this embodiment of the present invention, a transmission bandwidth in a basic time unit is indicated; and for a single carrier, a guard interval subcarrier does not exist between at least some available frequency segments of the single carrier in some time segments of the basic time unit, to improve system efficiency.

FIG. 2 is a schematic flowchart of a data transmission method 100 according to an embodiment of the present invention.

110. A network device generates first control signaling, where the first control signaling is used to indicate a transmission bandwidth in a basic time unit, a frequency resource corresponding to the basic time unit includes at least one frequency segment, and the transmission bandwidth is a bandwidth of some or all of the at least one frequency segment.

Specifically, when the network device implements large-bandwidth data transmission of an unlicensed spectrum by using a plurality of carriers, the network device generates the first control signaling used to indicate the transmission bandwidth in the basic time unit, and sends the first control signaling to a terminal device. In other words, when interference exists on the frequency segment , the terminal device does not perform PDCCH blind detection on an interfered serving cell, to avoid unnecessary power overheads and delay, so that system efficiency can be improved.

Therefore, in the data transmission method provided in the present invention, the first control signaling used to indicate the transmission bandwidth in the basic time unit is sent to the terminal device, so that the system efficiency can be improved.

Optionally, the frequency resource corresponding to the basic time unit includes a plurality of frequency segments, the transmission bandwidth is a bandwidth of some or all of the plurality of frequency segments, the basic time unit includes a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment. Optionally, the network device sends the first control signaling to the terminal device in the first time segment.

Specifically, a maximum bandwidth of a single carrier in an LTE system is 20 MHz, but a relatively large available bandwidth, for example, 80 MHz or 160 MHz, exists on an unlicensed spectrum. In the data transmission method provided in the present invention, the network device sends the first control signaling to the terminal device in the first time segment, to notify the terminal device of the transmission bandwidth in the basic time unit, where no guard interval subcarrier is exists between at least some frequency segments of the transmission bandwidth in the second time segment of the basic time unit. In other words, a guard interval subcarrier between at least some frequency segments of the transmission bandwidth in the second time segment of the basic time unit is used as an available subcarrier for data transmission.

Therefore, in the data transmission method provided in the present invention, a guard interval subcarrier does not exist between at least some available frequency segments of the transmission bandwidth in the second time segment of the basic time unit, so that a frequency resource occupied by the guard interval subcarrier is effectively utilized, thereby further improving the system efficiency.

In this embodiment of the present invention, optionally, the basic time unit includes a subframe, a transmission time interval, or a slot.

Specifically, the basic time unit represents a continuous period of time in time domain. For example, the basic time unit may be a subframe (subframe), a transmission time interval (Transmission Time Interval, "TTI" for short), or a slot (Slot).

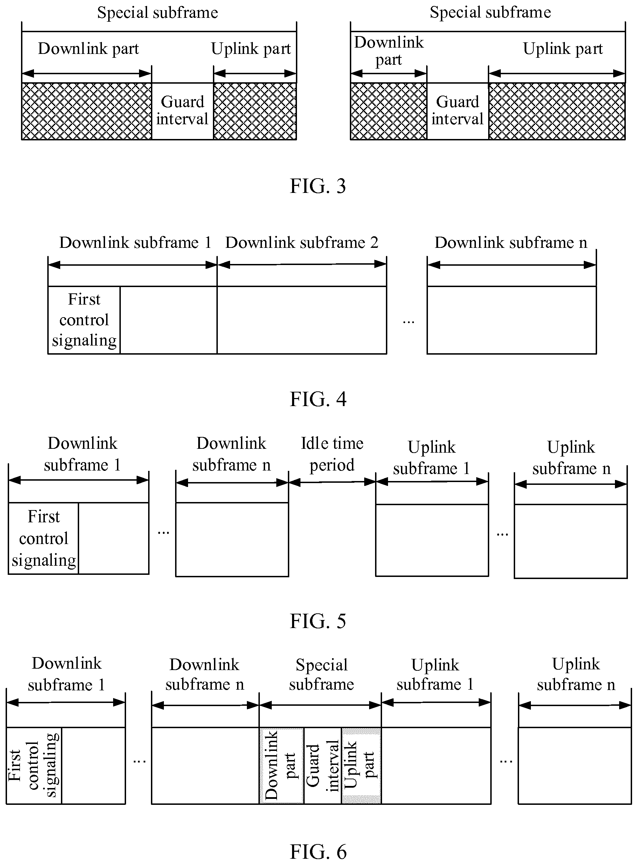

For another example, as shown in FIG. 3, the basic time unit may be a special or self-consistent subframe. Optionally, the basic time unit may alternatively be a special or self-consistent TTI, may be a special or self-consistent slot, or the like.

For still another example, the basic time unit may alternatively be a partial subframe (partial subframe). In other words, a quantity of OFDM symbols included in the basic time unit may be less than that in one subframe. For example, one subframe includes 14 OFDM symbols, and the partial subframe includes 7 symbols.

Further, the basic time unit may alternatively be a mini-slot (mini-slot). In other words, a quantity of OFDM symbols included in the basic time unit may be less than that in one slot. For example, one slot includes seven OFDM symbols, and the mini-slot includes one symbol or two symbols.

It should be understood that the foregoing quantities of symbols are only examples, and a specific quantity of symbols may be another value. This is not limited in the present invention.

Optionally, the first control signaling may alternatively be used to indicate a transmission bandwidth in a plurality basic time units starting from the basic time unit.

The following provides descriptions with reference to FIG. 4 to FIG. 6.

Optionally, the basic time unit is a downlink subframe.

For example, as shown in FIG. 4, first control signaling in the downlink subframe may indicate at least one consecutive downlink subframe starting from the downlink subframe.

For another example, as shown in FIG. 5, first control signaling in the downlink subframe may indicate a segment of continuous downlink transmission starting from the downlink subframe and a segment of uplink transmission. The downlink transmission may include at least one downlink subframe, the uplink transmission may include at least one uplink subframe, and an idle time period may exist between the downlink transmission and the uplink transmission.

For another example, as shown in FIG. 6, first control signaling in the downlink subframe may indicate a segment of continuous downlink transmission starting from the downlink subframe and a segment of uplink transmission. The downlink transmission may include at least one downlink subframe, the uplink transmission may include at least one uplink subframe, and a special or self-consistent subframe, TTI, or slot may be included between the downlink transmission and the uplink transmission.

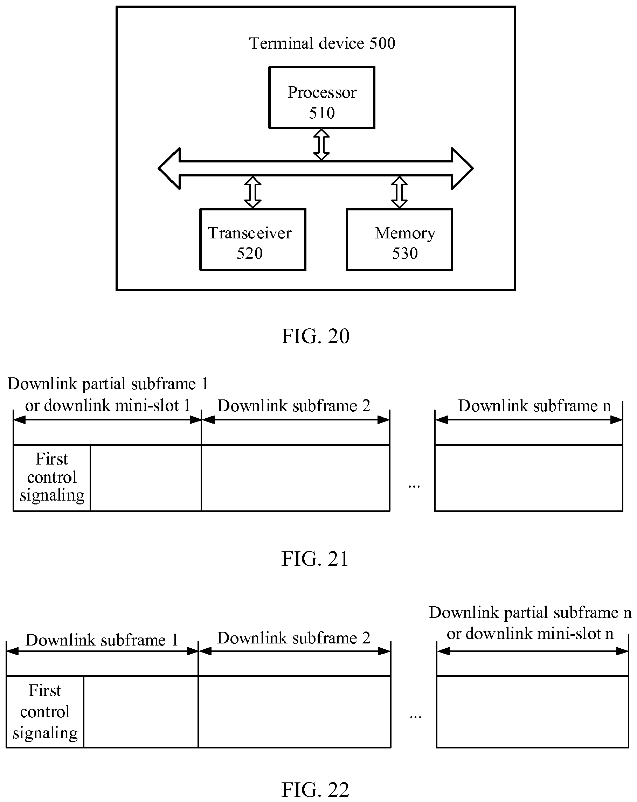

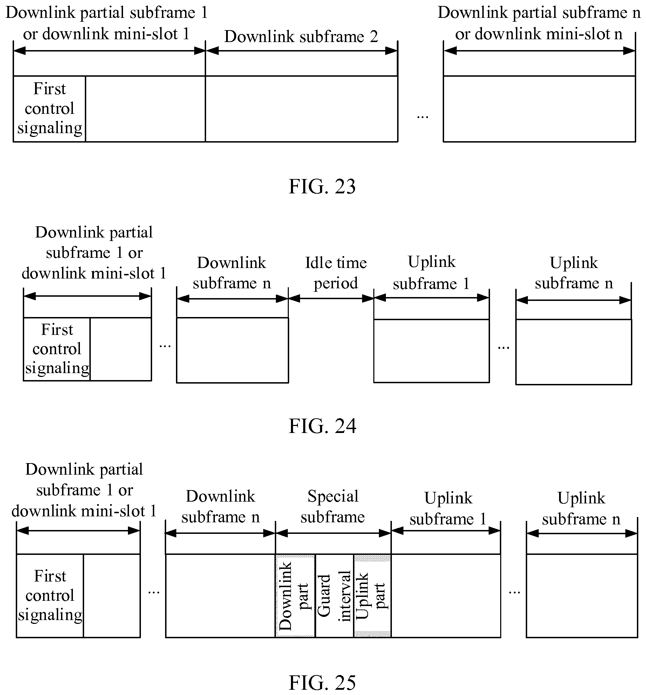

The basic time units shown in FIG. 4 may have a different combination. This is not limited in the present invention. The following provides descriptions by using FIG. 21 to FIG. 23 as examples. As shown in FIG. 21, one or more (only one is shown in the figure) basic time units serving as a starting point of a segment of continuous downlink transmission may be one or more partial subframes or mini-slots, and a basic time unit for subsequent transmission is a subframe. As shown in FIG. 22, a basic time unit serving as a starting point of a segment of continuous downlink transmission and a basic time unit for subsequent transmission each may be a subframe, and one or more (only one is shown in the figure) basic time units serving as an end point may be one or more partial subframes or mini-slots. As shown in FIG. 23, one or more (only one is shown in the figure) basic time units serving as a starting point of a segment of continuous downlink transmission may be one or more partial subframes or mini-slots, a basic time unit for subsequent transmission is a subframe, and one or more (only one is shown in the figure) basic time units serving as an end point may be one or more partial subframes or mini-slots. The combinations of the basic time units shown in FIG. 21 to FIG. 23 may also be applied to uplink transmission.

In addition, the combinations of the basic time units shown in FIG. 21 to FIG. 23 may also be applied to non-continuous transmission. The non-continuous transmission includes a segment of downlink transmission, a segment of uplink transmission, and an idle time period between the segment of downlink transmission and the segment of uplink transmission. Referring to FIG. 24, one or more (only one is shown in the figure) basic time units serving as a starting point of the downlink transmission before the idle time period may be one or more partial subframes or mini-slots, or one or more (only one is shown in the figure) basic time units serving as an end point of the downlink transmission may be one or more partial subframes or mini-slots. Such combination of the basic time units may also be applied to the uplink transmission after the idle time period

The combinations of the basic time units shown in FIG. 21 to FIG. 23 may also be applied to transmission including a special subframe. Referring to FIG. 25, in the transmission including the special subframe, one or more (only one is shown in the figure) basic time units serving as a starting point of downlink transmission before the special subframe may be one or more partial subframes or mini-slots, and one or more (only one is shown in the figure) basic time units serving as an end point of uplink transmission after the special subframe may be one or more partial subframes or mini-slots (not shown in the figure).

It should be understood that, FIG. 4 to FIG. 6 describe examples in which the basic time unit is the downlink subframe, and the first control signaling in the downlink subframe may be used to indicate the transmission bandwidth in the plurality of subframes starting from the downlink subframe. However, the present invention is not limited thereto.

It should be further understood that, the plurality of time units after the basic time unit may not include the first control signaling, or may include the first control signaling. This is not limited in the present invention.

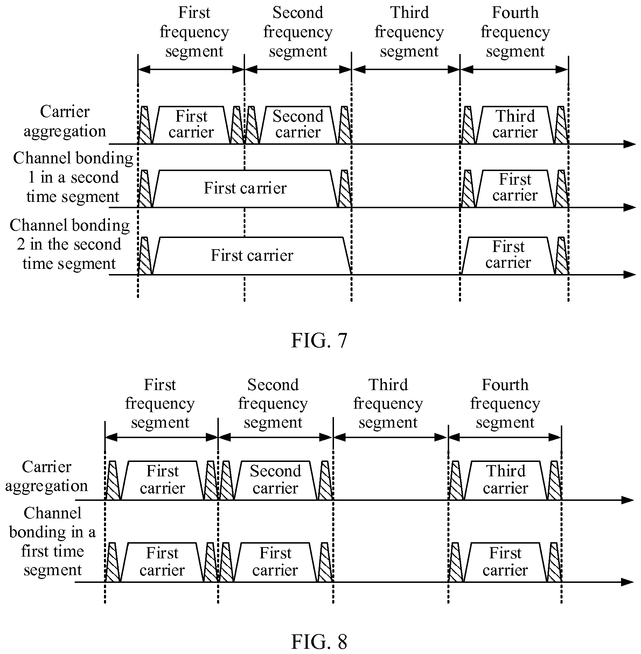

FIG. 7 to FIG. 10 each schematically show a transmission bandwidth according to an embodiment of the present invention. The following describes the transmission bandwidth in detail with reference to the accompanying drawings.

In an existing CA technology, each frequency segment in a transmission bandwidth is carried on a different carrier, a guard interval subcarrier exists between every two frequency segments, and the guard interval subcarrier is a null subcarrier. For example, as shown in the first row in FIG. 7, a first frequency segment is carried on a first carrier, a second frequency segment is carried on a second carrier, and so on. The first carrier and the second carrier are different carriers, and the guard interval subcarrier exists between the first frequency segment and the second frequency segment.

However, in the data transmission method provided in the present invention, channel bonding is performed on a single carrier. In other words, the transmission bandwidth formed by the plurality of frequency segments is carried on a same carrier. For example, as shown in the second row and the third row in FIG. 7, the first frequency segment, the second frequency segment, and a fourth frequency segment are all carried on the first carrier.

In the first time segment of this embodiment of the present invention, the guard interval subcarrier exists between the plurality of frequency segments. For example, as shown in FIG. 8, a guard interval subcarrier exists between a first frequency segment and a second frequency segment, between the second frequency segment and a third frequency segment, and between the third frequency segment and a fourth frequency segment.

In the second time segment of this embodiment of the present invention, a guard interval subcarrier does not exist between at least some of the plurality of frequency segments corresponding to the transmission bandwidth. In other words, a subcarrier between the at least some frequency segments is a non-null subcarrier.

Optionally, the frequency resource corresponding to the subcarrier between the at least some frequency segments may be used to transmit information.

Optionally, a guard interval subcarrier does not exist between contiguous available frequency segments of the transmission bandwidth, and a guard interval subcarrier exists between non-contiguous available frequency segments.

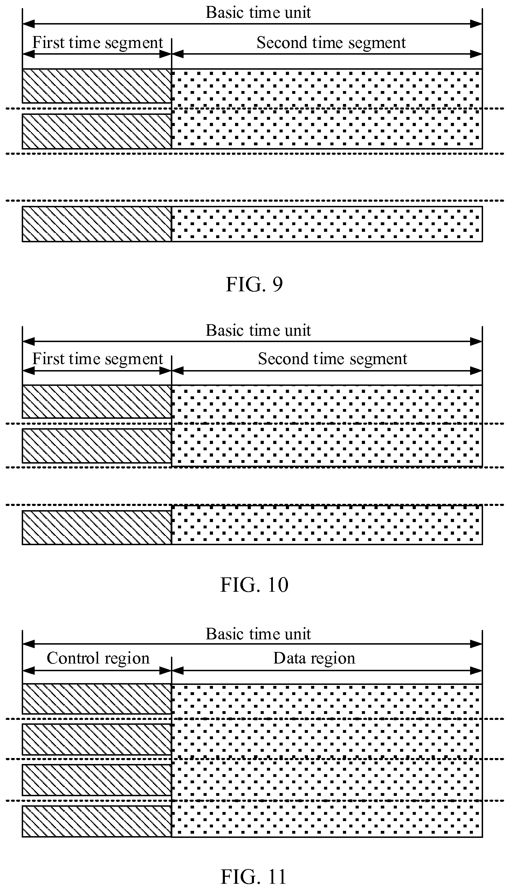

For example, corresponding to channel bonding 1 in the second time segment in FIG. 7, as shown in FIG. 9, a maximum bandwidth supported by the carrier is 80 MHz, and a frequency resource corresponding to the transmission bandwidth includes a first frequency segment of 20 MHz, a second frequency segment of 20 MHz, and a fourth frequency segment of 20 MHz, and a guard interval subcarrier does not exist between the first frequency segment of 20 MHz and the second frequency segment of 20 MHz, a guard interval subcarrier exists between the second frequency segment of 20 MHz and a third frequency segment of 20 MHz, and between the third frequency segment of 20 MHz and the fourth frequency segment of 20 MHz, to improve reliability of information transmission.

Optionally, no guard interval subcarrier may exist between the non-contiguous available frequency segments of the transmission bandwidth.

For example, corresponding to channel bonding 2 in the second time segment in FIG. 7, as shown in FIG. 10, a maximum bandwidth supported by the carrier is 80 MHz, and a frequency resource corresponding to the transmission bandwidth includes a first frequency segment of 20 MHz, a second frequency segment of 20 MHz, and a fourth frequency segment of 20 MHz, and a guard interval subcarrier does not exist between the first frequency segment of 20 MHz and the second frequency segment of 20 MHz.

Therefore, in the data transmission method provided in the present invention, a guard interval subcarrier does not exist between at least some available frequency segments in a single carrier in the second time segment of the basic time unit, so that a frequency resource occupied by the guard interval subcarrier is effectively utilized, thereby further improving the system efficiency.

It should be understood that, in this embodiment, a case in which the maximum bandwidth supported by the carrier is 80 MHz, and the frequency segment is 20 MHz is merely used as an example for description. This is not specifically limited in the present invention.

For example, the maximum bandwidth supported by the carrier may alternatively be 40 MHz, 160 MHz, 320 MHz, or another possible number. For example, the frequency segment may alternatively be 5 MHz, 10 MHz, or another possible number.

For another example, different used frequency bands may correspond to different frequency segment magnitudes and different maximum supported bandwidths. For example, in a 5G system, the maximum bandwidth supported by the carrier is 80 MHz, and the frequency segment is 20 MHz. For another example, in an SUB-1 GHz system, the maximum bandwidth supported by the carrier is 8 MHz, and the frequency segment is 2 MHz.

It should be further understood that, in this embodiment, that the third frequency segment is an interfered frequency segment is merely used as an example for description. This is not limited in the present invention. For example, each frequency segment in the maximum bandwidth supported by the carrier is an available frequency segment.

For another example, a plurality of contiguous or non-contiguous available frequency segments may have another combination. For example, the first frequency segment and the fourth frequency segment are available, or the first frequency segment and the third frequency segment are available, or the second frequency segment and the fourth frequency segment are available. This is not limited in the present invention.

120. The network device sends the first control signaling to the terminal device.

The terminal device performs a corresponding receiving action. In this embodiment of this application, the receiving action of the corresponding receiving end falls within the protection scope of the present invention, and details are not described.

Optionally, the first control signaling is sent to the terminal device on each frequency segment of the transmission bandwidth in the first time segment.

Specifically, the network device repeatedly sends, to the terminal device on each frequency segment of the transmission bandwidth in the first time segment of the basic time unit, the first control signaling used to indicate the transmission bandwidth. In other words, each frequency segment of the transmission bandwidth carries the same first control signaling.

In other words, the terminal device determines the transmission bandwidth in the maximum bandwidth supported by the carrier based on the received first control signaling, performs subsequent PDCCH blind detection based on the transmission bandwidth, and sends and/or receives uplink data based on the transmission bandwidth.

It should be understood that the first control signaling may be carried on each frequency segment of the transmission bandwidth, or may be carried on some frequency segments of the transmission bandwidth. This is not limited in the present invention. For example, the first control signaling is carried only on a primary frequency segment corresponding to each terminal device. Therefore, each terminal device can obtain the transmission bandwidth as long as the primary frequency segment is obtained through listening.

130. The terminal device performs data transmission with the network device based on the transmission bandwidth.

Specifically, the terminal device determines the transmission bandwidth based on the first control signaling received in the first time segment; and performs PDCCH blind detection based on the transmission bandwidth, to avoid performing the PDCCH blind detection on the interfered serving cell, thereby improving the system efficiency.

Optionally, the terminal device receives the first control signaling on the primary frequency segment. The primary frequency segment of the terminal device is a frequency segment of the transmission bandwidth.

Because a transmission bandwidth for each downlink transmission is variable, each UE listens on only the primary frequency segment in the bandwidth before starting to receive downlink transmission. The primary frequency segment of each terminal device is a frequency segment of the transmission bandwidth. The terminal device can obtain the transmission bandwidth by receiving the first control signaling on the primary frequency segment, and then performs subsequent downlink reception and/or uplink transmission based on PDCCH downlink control signaling.

For example, the maximum bandwidth supported by the carrier is 80 MHz, and the frequency segment is 20 MHz. A primary frequency segment of UE 1 is a first frequency segment of 20 MHz in a carrier bandwidth of 80 MHz, a primary frequency segment of UE 2 is a third frequency segment of 20 MHz in the carrier bandwidth of 80 MHz, and the first control signaling may be carried only on the first frequency segment of 20 MHz and the third frequency segment of 20 MHz in the carrier bandwidth of 80 MHz.

For another example, when all UEs can share a same frequency segment of 20 MHz in the carrier bandwidth of 80 MHz and use the frequency segment of 20 MHz as the primary frequency segment, the first control signaling may be carried only on the primary frequency segment.

Therefore, in the data transmission method provided in this embodiment of the present invention, the terminal device may perform the PDCCH blind detection based on the transmission bandwidth, to avoid performing the PDCCH blind detection on the interfered serving cell, thereby improving the system efficiency.

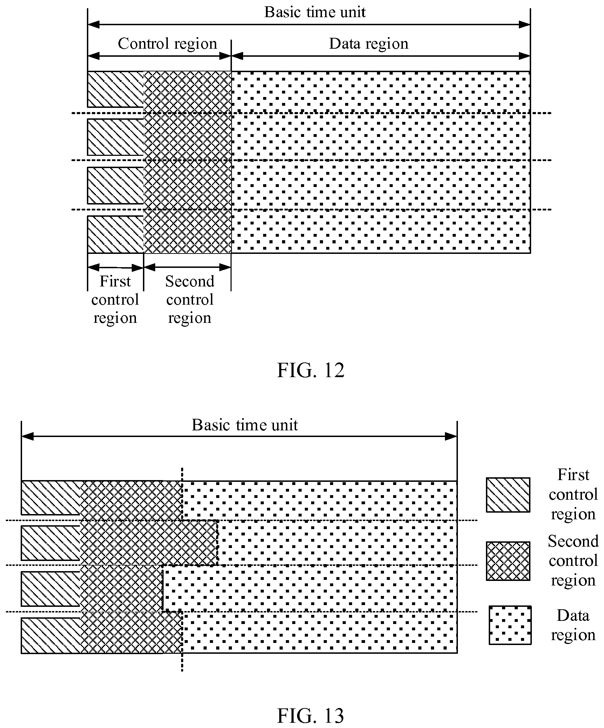

FIG. 11 and FIG. 12 each schematically show a location of a guard interval subcarrier according to an embodiment of the present invention. The following describes in detail, with reference to the accompanying drawings, a specific implementation of performing data transmission by using the guard interval subcarrier according to the present invention.

Optionally, in an embodiment of the present invention, the first time segment includes a control region, and the second time segment includes a data region. A guard interval subcarrier is included between the plurality of frequency segments of the transmission bandwidth in the control region of the basic time unit; and no guard interval subcarrier is included between the plurality of frequency segments of the transmission bandwidth in the data region of the basic time unit.

Optionally, the plurality of contiguous frequency segments are carried on a same carrier.

Therefore, in the data transmission method provided in the present invention, a guard interval subcarrier does not exist between at least some available frequency segments of the transmission bandwidth in the data region of the basic time unit, so that a frequency resource occupied by the guard interval subcarrier is effectively utilized, thereby further improving the system efficiency.

Optionally, in another embodiment of the present invention, the first time segment includes a control region, the control region includes a first control region and a second control region, the first control region is before the second control region, and the second time segment includes a data region.

For example, as shown in FIG. 11, a guard interval subcarrier is included between the plurality of contiguous frequency segments of the transmission bandwidth in the first control region and the second control region of the basic time unit; and no guard interval subcarrier is included between the plurality of contiguous frequency segments of the transmission bandwidth in the data region of the basic time unit.

Optionally, the plurality of contiguous frequency segments are carried on a same carrier.

Therefore, in the data transmission method provided in the present invention, a guard interval subcarrier does not exist between at least some available frequency segments of the transmission bandwidth in the data region of the basic time unit, so that a frequency resource occupied by the guard interval subcarrier is effectively utilized, thereby further improving the system efficiency.

Optionally, the first control signaling is located in a downlink control region of the special subframe.

Optionally, in still another embodiment of the present invention, the first time segment includes a first control region of a control region, and the second time segment includes a second control region of the control region and a data region.

For example, as shown in FIG. 12, a guard interval subcarrier is included between the plurality of contiguous frequency segments of the transmission bandwidth in the first control region of the basic time unit; and no guard interval subcarrier is included between the plurality of contiguous frequency segments of the transmission bandwidth in the data region and the second control region of the basic time unit.

Optionally, the plurality of contiguous frequency segments are carried on a same carrier.

Therefore, in the data transmission method provided in the present invention, a guard interval subcarrier does not exist between at least some available frequency segments of the transmission bandwidth in the data region and the second control region of the basic time unit, so that a frequency resource occupied by the guard interval subcarrier is effectively utilized, thereby further improving the system efficiency.

It should be understood that, for a subcarrier spacing in this embodiment of the present invention, there may be a plurality of types of subcarrier spacings. This is not limited in the present invention.

For example, some or all subcarrier spacings in the control region, the first control region, or the second control region are different from subcarrier spacings in the data region.

For another example, the second control region and the data region include same or different subcarrier spacings.

For another example, different basic time units may include same or different subcarrier spacings.

For another example, same or different subcarrier spacings may exist between the frequency segments.

For another example, same or different subcarrier spacings may exist in the frequency segment.

For another example, the foregoing solutions are combined, and so on.

It should be understood that FIG. 11 and FIG. 12 each are only an example of a schematic diagram of logical division. The basic time unit may not be divided into the control region and the data region. This is not specifically limited in the present invention.

For example, the basic time unit may include only a control region, and first control signaling in the control region is used to indicate a transmission bandwidth in a plurality basic time units after the basic time unit.

For another example, some or all time units of at least one basic time unit after the basic time unit may include only a control region or a second control region.

For another example, some or all time units of at least one basic time unit after the basic time unit may include only a data region.

For another example, some or all time units of at least one basic time unit after the basic time unit may include both a control region and a data region.

For another example, when the basic time unit is a special subframe, optionally, a downlink part of the basic time unit may include only a control region, or may include only a data region, or may include both a control region and a data region; and optionally, an uplink part of the basic time unit may include only a control region, or may include only a data region, or may include both a control region and a data region.

Optionally, quantities of orthogonal frequency division multiplexing OFDM symbols in the second control region are the same or different in different frequency segments.

FIG. 13 schematically shows quantities of OFDM symbols in a second control region of a basic time unit in different frequency segments according to an embodiment of the present invention. As shown in FIG. 13, in the transmission bandwidth, a control region of on first frequency segment is equal to a control region on a fourth frequency segment, is larger than a control region of a third frequency segment, and is smaller than a control region of a second frequency segment.

In 120, optionally, the network device sends the first control signaling to the terminal device in the first control region.

Optionally, the first control region is one OFDM symbol.

In other words, the network device sends the first control signaling to the terminal device on the first OFDM symbol of the basic time unit, so that the terminal device may use, from the second OFDM symbol of the basic time unit, a frequency resource corresponding to a guard interval subcarrier to perform data transmission, thereby effectively reducing system overheads.

It should be understood that the network device may send the first control signaling in the first control region, or may send the first control signaling at another moment in the first time segment, for example, on the second OFDM symbol of the basic time unit. In other words, when the first control signaling is sent, a specific time domain location in the first time segment is not limited in the present invention.

The foregoing describes, with reference to FIG. 11 to FIG. 13, the first control signaling provided in the present invention, which is used to indicate a specific frequency domain location at which the terminal device receives the information. The following describes in detail second control signaling, third control signaling, and a reference signal that are related to the data transmission method provided in the present invention.

It should be understood that the solutions of the embodiments of the present invention may be implemented separately, or may be implemented in combination. This is not limited in the present invention.

Optionally, the data transmission method 100 provided in the present invention further includes:
sending, by the network device, the second control signaling to the terminal device in the first control region or the second control region, where the second control signaling is used to indicate a quantity of OFDM symbols in the control region corresponding to the transmission bandwidth or a quantity of OFDM symbols in the second control region corresponding to the transmission bandwidth.

Specifically, the second control signaling sent by the network device to the terminal device is used to indicate the quantity of OFDM symbols in the control region or the second control region in the basic time unit. In other words, the terminal device determines the quantity of OFDM symbols in the control region in the basic time unit by using the received second control signaling, to accurately receive information carried in the data region.

Optionally, the network device sends the second control signaling to the terminal device on each frequency segment of the transmission bandwidth in the first control region or the second control region.

It should be understood that a function of the second control signaling is to indicate, to the terminal device, the quantity of symbols in the control region or the second control region. The second control signaling may be carried on first several resource elements (Resource Element, RE) of the control region, and is used to indicate the quantity of OFDM symbols in the control region or the second control region. The second control signaling may alternatively be carried on another RE of the control region, and is used to indicate the quantity of OFDM symbols in the control region or the second control region. A specific location that is in the control region and in which the second control signaling is carried is not limited in the present invention.

For example, the second control signaling may be carried in the first control region.

For another example, the second control signaling and the first control signaling may be combined into one piece of control signaling. In other words, the first control signaling is further used to indicate the quantity of OFDM symbols in the control region corresponding to the transmission bandwidth or the quantity of OFDM symbols in the second control region corresponding to the transmission bandwidth.

For another example, the second control signaling may alternatively be carried on a last RE of the control region or the second control region, and is used to identify a last symbol of the control region in the basic time unit.

It should be further understood that each frequency segment of the transmission bandwidth may carry the same second control signaling, to indicate the quantity of OFDM symbols in the control region in the transmission bandwidth or the quantity of OFDM symbols in the second control region in the transmission bandwidth. Each frequency segment of the transmission bandwidth may alternatively carry same or different second control signaling, to indicate a quantity of OFDM symbols in the control region in the corresponding frequency segment or a quantity of OFDM symbols in the second control region in the corresponding frequency segment. The second control signaling carried on a specific frequency segment of the transmission bandwidth is not limited in the present invention.

For example, in another embodiment, optionally, the data transmission method 100 provided in the present invention includes:
sending, by the network device, second control sub-signaling to the terminal device on each frequency segment of the transmission bandwidth in the first control region or the second control region, where the second control sub-signaling sent on each frequency segment is used to indicate a quantity of OFDM symbols in the control region in the corresponding frequency segment or a quantity of OFDM symbols in the second control region in the corresponding frequency segment.

Specifically, the second control signaling may include at least one piece of second control sub-signaling, and each frequency segment carries one piece of second control sub-signaling. The second control sub-signaling is used to indicate the quantity of OFDM symbols in the second control region or the control region in the corresponding frequency segment. In other words, the second control sub-signaling in the second control signaling is in a one-to-one correspondence with the frequency segment of the transmission bandwidth, and each of the plurality of pieces of second control sub-signaling is used to indicate the quantity of OFDM symbols in the control region of the basic time unit in the corresponding frequency segment bandwidth.

Optionally, the data transmission method 100 provided in the present invention further includes:
sending, by the network device, third control signaling to the terminal device in the first control region or the second control region, where the third control signaling is used to indicate scheduling information of the terminal device.

Specifically, the third control signaling may be a downlink scheduling assignment (DLAssignment) or an uplink scheduling grant (UL_grant), and carries scheduling information indicating time-frequency resource allocation of a physical downlink shared channel (PDSCH) or a physical uplink shared channel (PUSCH), and the like. After receiving the corresponding third control signaling, the UE correspondingly receives downlink data, namely, the PDSCH, or sends uplink data, namely, the PUSCH.

Optionally, the terminal device determines, based on the third control signaling, a resource block RB resource allocated by the network device to the terminal device; the terminal device performs listen before talk LBT detection on a frequency segment on which the RB resource is located; and the terminal device performs uplink transmission based on the transmission bandwidth if the LBT detection succeeds, where a subcarrier corresponding to the RB resource is an available subcarrier for uplink transmission of the terminal device, and another subcarrier in the transmission bandwidth is a null subcarrier.

It should be understood that in this embodiment of the present invention, the terminal device may perform uplink transmission based on the transmission bandwidth indicated by the first control signaling, or may determine an uplink transmission bandwidth in another manner. This is not limited in the present invention.

For example, the third control signaling may also be used to indicate the uplink transmission bandwidth, to improve the system efficiency.

Specifically, the terminal device receives the third control signaling in the downlink subframe, to obtain uplink scheduling-related signaling. The third control signaling includes an RB resource allocated to a first scheduling terminal device for uplink transmission and uplink transmission bandwidth information. The terminal device performs the LBT detection based on a frequency segment of 20 MHz on which the allocated uplink transmission RB resource is located. If the LBT detection succeeds, the terminal device generates and sends an uplink subframe based on the uplink bandwidth information.

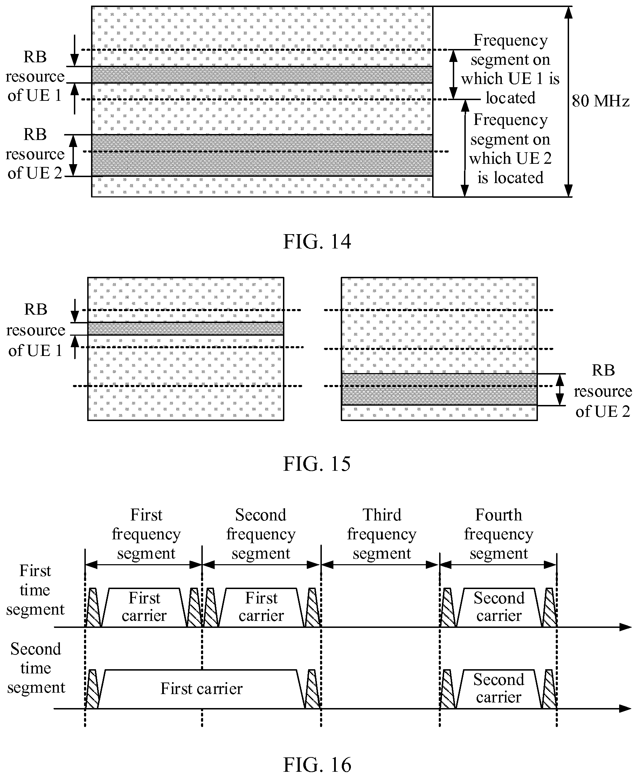

The following provides descriptions with reference to FIG. 14 and FIG. 15.

FIG. 14 schematically shows LBT detection according to an embodiment of the present invention. As shown in FIG. 14, a maximum bandwidth supported by a carrier is 80 MHz, and a frequency segment is 20 MHz. An uplink transmission bandwidth allocated to UE 1 is 80 MHz, and an uplink transmission RB resource allocated to the UE 1 is several RBs in a second frequency segment of 20 MHz in the bandwidth of 80 MHz. An uplink transmission bandwidth allocated to UE 2 is 80 MHz, and an uplink transmission RB resource allocated to the UE 2 is several RBs in a third frequency segment of 20 MHz and a fourth frequency segment of 20 MHz in the bandwidth of 80 MHz.

Therefore, the UE 1 performs LBT detection on the second frequency segment of 20 MHz. The UE 2 performs LBT detection on the third frequency segment of 20 MHz and the fourth frequency segment of 20 MHz. In this case, LBT detection may be performed on two 20-MHz frequency segments, or LBT detection may be performed on one 40-MHz frequency segment, or the LBT detection is performed in another pre-specified manner. This is not limited in the present invention.

FIG. 15 is a schematic diagram of an uplink subframe configuration according to an embodiment of the present invention. As shown in FIG. 15, an uplink transmission bandwidth is 80 MHz, and a frequency segment is 20 MHz. In the uplink subframe, no guard interval subcarrier is included between at least some of a plurality of frequency segments of the transmission bandwidth.

UE generates and sends an uplink subframe based on a carrier configuration of 80 MHz. For UE 1, an allocated uplink transmission RB resource is several RBs in a second frequency segment of 20 MHz in the bandwidth of 80 MHz, a subcarrier corresponding to the RB is an available subcarrier of the UE 1, and remaining subcarriers are all null subcarriers. For UE 2, an allocated uplink transmission RB resource is several RBs in a third frequency segment of 20 MHz and a fourth frequency segment of 20 MHz in the bandwidth of 80 MHz, a subcarrier corresponding to the RB is an available subcarrier of the UE 2, and remaining subcarriers are all null subcarriers.

Therefore, in the data transmission method provided in the present invention, the subcarrier corresponding to the resource block RB resource allocated by the network device to the terminal device is the available subcarrier for uplink transmission of the terminal device, and the other subcarriers in the transmission bandwidth are null subcarriers. In other words, a guard interval subcarrier does not exist between at least some available frequency segments of the transmission bandwidth, so that a frequency resource occupied by the guard interval subcarrier is effectively utilized, thereby further improving the system efficiency.

Optionally, the network device may send the third control signaling to the terminal device on each frequency segment of the transmission bandwidth in the first control region or the second control region, where the third control signaling sent on each frequency segment is used to indicate scheduling information of the terminal device on the corresponding frequency segment.

It should be understood that, on the corresponding frequency segment, the third control signaling may be used to schedule at least one UE to perform downlink reception or uplink transmission. In other words, the third control signaling is used to indicate scheduling information of the at least one scheduled UE in the corresponding frequency segment bandwidth.

For example, if there are ten scheduled UEs respectively corresponding to ten pieces of scheduling information, and a frequency resource corresponding to a first frequency segment of the transmission bandwidth is allocated to three of the ten scheduled UEs, scheduling information of the three scheduled UEs is carried on the first frequency segment.

It should be understood that, the third control signaling may be carried in the first control region, the second control region, or the control region. A specific OFDM location that is in the first control region, the second control region, or the control region and in which the third control signaling is carried is not limited in the present invention.

It should be further understood that one or more pieces of third control signaling may be carried in the first control region, the second control region, or the control region, to schedule at least one UE to perform downlink transmission or uplink transmission. The third control signaling carried on the specific frequency segment is not limited in the present invention.

For example, the network device sends at least one piece of same third control signaling on each frequency segment, to schedule at least one UE to perform downlink reception or uplink transmission.

For another example, the third control signaling sent by the network device on each frequency segment may alternatively be used to indicate scheduling information of the terminal device on another frequency segment. More specifically, the at least one piece of third control signaling may be used to select a frequency segment from the frequency segments of the transmission bandwidth, to perform resource mapping.

For another example, the network device may alternatively send same third control signaling on each frequency segment, to indicate scheduling information of a corresponding terminal device on the transmission bandwidth. This is not limited in the present invention.

It should be further understood that the function of the third control signaling in this embodiment of the present invention is to indicate downlink scheduling information or uplink scheduling information of the scheduled UE, the scheduled UE may be scheduled UE in a current basic time unit, or may be scheduled UE in a subsequent basic time unit. This is not limited in the present invention.

Optionally, the data transmission method provided in the present invention further includes: performing, by the network device, data transmission with the terminal device based on the transmission bandwidth in the data region.

In an existing LTE system, a guard interval subcarrier exists between contiguous available frequency segments in the second time segment, and the guard interval subcarrier is a null subcarrier. Therefore, a channel estimation value for a resource block (Resource Block, "RB" for short) corresponding to the guard interval subcarrier cannot be obtained. However, the transmission bandwidth in the present invention may include a guard interval subcarrier between at least some frequency segments of the transmission bandwidth, and a corresponding subcarrier is used as an available subcarrier for transmitting information. Therefore, a channel estimation value for an RB corresponding to the subcarrier needs to be obtained.

The data transmission method 100 provided in the present invention further includes:
sending, by the network device, a reference signal to the terminal device on an interval subcarrier between the frequency segments of the transmission bandwidth in the second time segment, where the interval subcarrier is a subcarrier corresponding to the guard interval subcarrier in the first time segment.

Specifically, the network device sends, to the terminal device, a cell-specific reference signal CRS or a demodulation reference signal DMRS carried on the interval subcarrier between the frequency segments of the transmission bandwidth in the second time segment, and the CRS or the DMRS is used to indicate a channel estimation value for the interval subcarrier between the frequency segments of the transmission bandwidth.

For example, the network device sends, to the terminal device, a cell-specific reference signal CRS or a demodulation reference signal DMRS carried on the first orthogonal frequency division multiplexing OFDM symbol in the second time segment of the basic time unit. More specifically, an additional CRS pilot is inserted into the first OFDM symbol on an RB corresponding to the second control region of the control region, where the control region is corresponding to the interval subcarrier between the frequency segments of the transmission bandwidth, or a DMRS pilot is used in the data region in the second control region.

It should be understood that the terminal device may alternatively perform channel estimation by receiving a reference signal of another type. This is not limited in the present invention. For example, a mobile station-specific reference signal (UE-specific RS) is received.

It should be understood that the control signaling provided in the present invention is only an example for description, and should not constitute a limitation on implementation of the present invention. For example, the method provided in the present invention may further include: receiving feedback information (ACK or NACK) sent by the network device for the PUSCH, that is, physical HARQ indicator channel (Physical HARQ Indicator Channel, PHICH) information, and the like.

It should be understood that the solutions of the embodiments of the present invention may be implemented separately, or may be implemented in combination with a CA technology. This is not limited in the present invention. For example, carrier aggregation is performed on a plurality of carriers supporting a maximum bandwidth of over 20 MHz, and a guard interval subcarrier does not exist between at least some available frequency segments in a single carrier, so that a frequency resource occupied by the guard interval subcarrier is effectively utilized, thereby further improving the system efficiency.

FIG. 16 schematically shows a technical solution combining a data transmission method and a carrier aggregation method according to an embodiment of the present invention.

As shown in Figure 16, the data transmission method provided in the present invention is applied to a first carrier. In other words, a first frequency segment and a second frequency segment are carried on the same first carrier through channel bonding. More specifically, a guard interval subcarrier exists between the first frequency segment and the second frequency segment of the first carrier in the first time segment, and a guard interval subcarrier does not exist in the second time segment. A fourth frequency segment is carried on another carrier, for example, a second carrier. Carrier aggregation is performed on the first carrier and the second carrier.

It should be understood that, FIG. 16 shows only an example of a combination of the data transmission method and the carrier aggregation method according to this embodiment of the present invention. This is not limited in the present invention. For example, a third frequency segment may also be used for transmitting data. For another example, a plurality of carriers are aggregated.

More specifically, for example, when a maximum bandwidth supported by a single carrier is 80 MHz, if a transmission bandwidth greater than 80 MHz, for example, a bandwidth of 160 MHz, is to be used, carrier aggregation is performed on two carriers each having a bandwidth of 80 MHz.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In an implementation process, steps in the foregoing methods can be implemented by using a hardware integrated logical circuit in the processor, or by using instructions in a form of software. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory, and a processor executes instructions in the memory and completes the steps in the foregoing methods in combination with hardware of the processor. To avoid repetition, details are not described herein again.

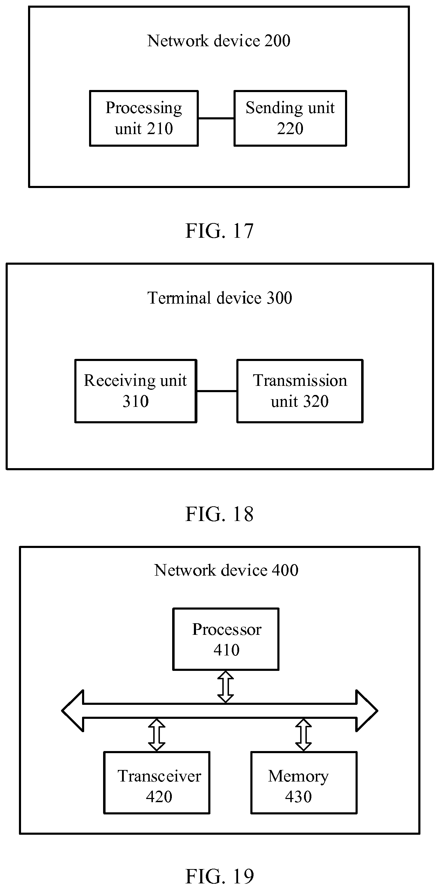

FIG. 17 is a schematic block diagram of a network device 200 according to an embodiment of the present invention. As shown in FIG. 17, the network device 200 includes:
a processing unit 210, configured to generate first control signaling, where the first control signaling is used to indicate a transmission bandwidth in a basic time unit, a frequency resource corresponding to the basic time unit includes at least one frequency segment, and the transmission bandwidth is a bandwidth of some or all of the at least one frequency segment; and
a sending unit 220, configured to send the first control signaling to the terminal device.

Optionally, the frequency resource corresponding to the basic time unit includes a plurality of frequency segments, the transmission bandwidth is a bandwidth of some or all of the plurality of frequency segments, the basic time unit includes a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment.

The sending unit 220 is specifically configured to:
send the first control signaling to the terminal device in the first time segment.

Optionally, the sending unit 220 is further specifically configured to:
send the first control signaling to the terminal device on each frequency segment of the transmission bandwidth in the first time segment.

Optionally, the first time segment includes a control region, and the second time segment includes a data region.

Optionally, the first time segment includes a control region, the control region includes a first control region and a second control region, the first control region is before the second control region, and the second time segment includes a data region.

Optionally, the first time segment includes a first control region of a control region, and the second time segment includes a second control region of the control region and a data region.

Optionally, quantities of orthogonal frequency division multiplexing OFDM symbols in the second control region are the same or different in different frequency segments.

Optionally, the sending unit 220 is further specifically configured to:
send the first control signaling to the terminal device in the first control region, where the first control region is one OFDM symbol.

Optionally, the first control signaling is further used to indicate a quantity of OFDM symbols in the control region or a quantity of OFDM symbols in the second control region.

Optionally, the sending unit 220 is further configured to:
send second control signaling to the terminal device in the first control region or the second control region, where the second control signaling is used to indicate the quantity of OFDM symbols in the control region or the quantity of OFDM symbols in the second control region.

Optionally, the sending unit 220 is specifically configured to:
send the second control signaling to the terminal device on each frequency segment of the transmission bandwidth in the first control region or the second control region.

Optionally, the sending unit 220 is further specifically configured to:
send second control sub-signaling to the terminal device on each frequency segment of the transmission bandwidth in the first control region or the second control region, where the second control sub-signaling sent on each frequency segment is used to indicate a quantity of OFDM symbols in the control region in the corresponding frequency segment or a quantity of OFDM symbols in the second control region in the corresponding frequency segment.

Optionally, the sending unit 220 is further configured to:
send third control signaling to the terminal device in the first control region or the second control region, where the third control signaling is used to indicate scheduling information of the terminal device.

Optionally, the sending unit 220 is specifically configured to:
send the third control signaling to the terminal device on each frequency segment of the transmission bandwidth in the first control region or the second control region, where the third control signaling sent on each frequency segment is used to indicate scheduling information of the terminal device on the corresponding frequency segment.

Optionally, the network device 200 further includes:
a transmission unit 230, configured to perform data transmission with the terminal device based on the transmission bandwidth in the data region.

Optionally, the sending unit 220 is further configured to:
send a reference signal to the terminal device on an interval subcarrier between the frequency segments of the transmission bandwidth in the second time segment, where the interval subcarrier is a subcarrier corresponding to the guard interval subcarrier in the first time segment.

Optionally, the basic time unit includes a sub frame, a transmission time interval, or a slot.

Optionally, the first control signaling is used to indicate a transmission bandwidth in a plurality basic time units starting from the basic time unit.

FIG. 18 is a schematic block diagram of a terminal device 300 according to an embodiment of the present invention. As shown in FIG. 18, the terminal device 300 includes:
a receiving unit 310, configured to receive first control signaling sent by a network device, where the first control signaling is used to indicate a transmission bandwidth in a basic time unit, a frequency resource corresponding to the basic time unit includes at least one frequency segment, and the transmission bandwidth is a bandwidth of some or all of the at least one frequency segment; and
a transmission unit 320, configured to perform data transmission with the network device based on the transmission bandwidth.

Optionally, the frequency resource corresponding to the basic time unit includes a plurality of frequency segments, the transmission bandwidth is a bandwidth of some or all of the plurality of frequency segments, the basic time unit includes a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment.

The receiving unit 310 is specifically configured to:
send, by the terminal device, the first control signaling to the terminal device in the first time segment.

Optionally, the receiving unit 310 is further specifically configured to:
receive the first control signaling on a primary frequency segment, where the primary frequency segment of the terminal device is a frequency segment of the transmission bandwidth.

Optionally, primary frequency segments of different terminal devices are the same or different.

Optionally, the first time segment includes a control region, and the second time segment includes a data region.

Optionally, the first time segment includes a control region, the control region includes a first control region and a second control region, the first control region is before the second control region, and the second time segment includes a data region.

Optionally, the first time segment includes a first control region of a control region, and the second time segment includes a second control region of the control region and a data region.

Optionally, quantities of orthogonal frequency division multiplexing OFDM symbols in the second control region are the same or different in different frequency segments.

Optionally, the receiving unit 310 is further specifically configured to:
receive the first control signaling in the first control region, where the first control region is one OFDM symbol.

Optionally, the first control signaling is further used to indicate a quantity of OFDM symbols in the control region or a quantity of OFDM symbols in the second control region.

Optionally, the receiving unit 310 is further configured to:
receive, in the first control region or the second control region, second control signaling sent by the network device, where the second control signaling is used to indicate the quantity of OFDM symbols in the control region or the quantity of OFDM symbols in the second control region.

Optionally, the receiving unit 310 is specifically configured to:
receive, on each frequency segment of the transmission bandwidth in the first control region or the second control region, the second control signaling sent by the network device.

Optionally, the receiving unit 310 is specifically configured to:
receive, on each frequency segment of the transmission bandwidth in the first control region or the second control region, second control sub-signaling sent by the network device, where the second control sub-signaling sent on each frequency segment is used to indicate a quantity of OFDM symbols in the control region in the corresponding frequency segment or a quantity of OFDM symbols in the second control region in the corresponding frequency segment.

Optionally, the receiving unit 310 is further configured to:
receive, in the first control region or the second control region, third control signaling sent by the network device, where the third control signaling is used to indicate scheduling information of the terminal device.

Optionally, the receiving unit 310 is specifically configured to:
receive, on each frequency segment of the transmission bandwidth in the first control region or the second control region, third control sub-signaling sent by the network device, where the third control sub-signaling sent on each frequency segment is used to indicate scheduling information of the terminal device on the corresponding frequency segment.

Optionally, the transmission unit 320 is specifically configured to:
determine, based on the third control signaling, a resource block RB resource allocated by the network device to the terminal device; perform, by the terminal device, listen before talk detection on a frequency segment on which the RB resource is located; and perform, by the terminal device, uplink transmission based on the transmission bandwidth if the LBT detection succeeds, where a subcarrier corresponding to the RB resource is an available subcarrier for uplink transmission of the terminal device, and another subcarrier in the transmission bandwidth is a null subcarrier.

Optionally, the receiving unit 310 is further configured to:
receive, on an interval subcarrier between the frequency segments of the transmission bandwidth in the second time segment, a reference signal sent by the network device, where the interval subcarrier is a subcarrier corresponding to the guard interval subcarrier in the first time segment.

Optionally, the basic time unit includes a sub frame, a transmission time interval, or a slot.

Optionally, the first control signaling is used to indicate a transmission bandwidth in a plurality basic time units starting from the basic time unit.

FIG. 19 is a schematic block diagram of a network device 400 according to an embodiment of the present invention.

As shown in FIG. 19, the network device 400 includes a processor 410, a transceiver 420, and a memory 430. The processor 410, the transceiver 420, and the memory 430 are connected by using a bus system. The memory 430 is configured to store an instruction. The processor 410 is configured to execute the instruction stored in the memory 430, to control the transceiver 420 to receive or send a signal.

The processor 410 is configured to generate first control signaling, where the first control signaling is used to indicate a transmission bandwidth in a basic time unit, a frequency resource corresponding to the basic time unit includes at least one frequency segment, and the transmission bandwidth is a bandwidth of some or all of the at least one frequency segment.

The transceiver 420 is configured to send the first control signaling to the terminal device.

The memory 430 is configured to store the first control signaling.

Optionally, the frequency resource corresponding to the basic time unit includes a plurality of frequency segments, the transmission bandwidth is a bandwidth of some or all of the plurality of frequency segments, the basic time unit includes a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment.

The transceiver 420 is specifically configured to send the first control signaling to the terminal device in the first time segment.

It should be understood that, the network device 400 according to this embodiment of the present invention may correspond to the network device 200 in the method embodiment of the present invention, and the foregoing and other operations and/or functions of the modules in the network device 400 are to implement a corresponding process of the method 100. For brevity, details are not described herein again.

FIG. 20 is a schematic block diagram of a terminal device 500 according to an embodiment of the present invention.

As shown in FIG. 20, the terminal device 500 includes a processor 510, a transceiver 520, and a memory 530. The processor 510, the transceiver 520, and the memory 530 are connected by using a bus system. The memory 530 is configured to store an instruction. The processor 510 is configured to execute the instruction stored in the memory 530, to control the transceiver 520 to receive or send a signal.

The transceiver 520 is configured to receive first control signaling sent by a network device, where the first control signaling is used to indicate a transmission bandwidth in a basic time unit, a frequency resource corresponding to the basic time unit includes at least one frequency segment, and the transmission bandwidth is a bandwidth of some or all of the at least one frequency segment.

The transceiver 520 is configured to perform data transmission with the network device based on the transmission bandwidth.

The memory 530 is configured to store the first control signaling.

Optionally, the frequency resource corresponding to the basic time unit includes a plurality of frequency segments, the transmission bandwidth is a bandwidth of some or all of the plurality of frequency segments, the basic time unit includes a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment.

The transceiver 520 is specifically configured to send, by the terminal device, the first control signaling to the terminal device in the first time segment.

It should be understood that, the terminal device 500 according to this embodiment of the present invention may correspond to the terminal device 300 in the method embodiment of the present invention, and the foregoing and other operations and/or functions of the modules in the terminal device 500 are to implement a corresponding process of the method 100. For brevity, details are not described herein again.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, "ROM" for short), a random access memory (Random Access Memory, "RAM" for short), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, wherein the method comprises:
generating first control signaling, wherein the first control signaling is used to indicate a transmission bandwidth in a basic time unit, a frequency resource corresponding to the basic time unit comprises at least one frequency segment, and the transmission bandwidth is a bandwidth of some or all of the at least one frequency segment; and
sending the first control signaling to a terminal device.

2. The method according to claim 1, wherein the frequency resource corresponding to the basic time unit comprises a plurality of frequency segments, the transmission bandwidth is a bandwidth of some or all of the plurality of frequency segments, the basic time unit comprises a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment; and
the sending the first control signaling to a terminal device comprises:
sending the first control signaling to the terminal device in the first time segment.

3. The method according to claim 2, wherein the sending the first control signaling to the terminal device in the first time segment comprises:
sending the first control signaling to the terminal device on each frequency segment of the transmission bandwidth in the first time segment.

4. The method according to claim 2 or 3, wherein the first time segment comprises a control region, and the second time segment comprises a data region.

5. The method according to claim 2 or 3, wherein the first time segment comprises a control region, the control region comprises a first control region and a second control region, the first control region is before the second control region, and the second time segment comprises a data region.

6. The method according to claim 2 or 3, wherein the first time segment comprises a first control region of a control region, and the second time segment comprises a second control region of the control region and a data region.

7. The method according to claim 5 or 6, wherein quantities of orthogonal frequency division multiplexing OFDM symbols in the second control region are the same or different in different frequency segments.

8. The method according to any one of claims 5 to 7, wherein the sending the first control signaling to the terminal device in the first time segment comprises:
sending the first control signaling to the terminal device in the first control region, wherein the first control region is one OFDM symbol.

9. The method according to any one of claims 4 to 8, wherein the first control signaling is further used to indicate a quantity of OFDM symbols in the control region or a quantity of OFDM symbols in the second control region.

10. The method according to any one of claims 5 to 9, wherein the method further comprises:
sending second control signaling to the terminal device in the first control region or the second control region, wherein the second control signaling is used to indicate the quantity of OFDM symbols in the control region or the quantity of OFDM symbols in the second control region.

11. The method according to claim 10, wherein the sending second control signaling to the terminal device in the first control region or the second control region comprises:
sending the second control signaling to the terminal device on each frequency segment of the transmission bandwidth in the first control region or the second control region.

12. The method according to any one of claims 5 to 9, wherein the method further comprises:
sending second control sub-signaling to the terminal device on each frequency segment of the transmission bandwidth in the first control region or the second control region, wherein the second control sub-signaling sent on each frequency segment is used to indicate a quantity of OFDM symbols in the control region in the corresponding frequency segment or a quantity of OFDM symbols in the second control region in the corresponding frequency segment.

13. The method according to any one of claims 5 to 12, wherein the method further comprises:
sending third control signaling to the terminal device in the first control region or the second control region, wherein the third control signaling is used to indicate scheduling information of the terminal device.

14. The method according to claim 13, wherein the sending third control signaling to the terminal device in the first control region or the second control region comprises:
sending the third control signaling to the terminal device on each frequency segment of the transmission bandwidth in the first control region or the second control region, wherein the third control signaling sent on each frequency segment is used to indicate scheduling information of the terminal device on the corresponding frequency segment.

15. The method according to any one of claims 4 to 14, wherein the method further comprises:
performing data transmission with the terminal device based on the transmission bandwidth in the data region.

16. The method according to any one of claims 1 to 15, wherein the method further comprises:
sending a reference signal to the terminal device on an interval subcarrier between the frequency segments of the transmission bandwidth in the second time segment, wherein the interval subcarrier is a subcarrier corresponding to the guard interval subcarrier in the first time segment.

17. The method according to any one of claims 1 to 16, wherein the basic time unit comprises a subframe, a transmission time interval, or a slot.

18. The method according to any one of claims 1 to 17, wherein the first control signaling is used to indicate a transmission bandwidth in a plurality basic time units starting from the basic time unit.

19. A data transmission method, wherein the method comprises:
receiving, by a terminal device, first control signaling sent by a network device, wherein the first control signaling is used to indicate a transmission bandwidth in a basic time unit, a frequency resource corresponding to the basic time unit comprises at least one frequency segment, and the transmission bandwidth is a bandwidth of some or all of the at least one frequency segment; and
performing, by the terminal device, data transmission with the network device based on the transmission bandwidth.

20. The method according to claim 19, wherein the frequency resource corresponding to the basic time unit comprises a plurality of frequency segments, the transmission bandwidth is a bandwidth of some or all of the plurality of frequency segments, the basic time unit comprises a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment; and
the receiving, by a terminal device, first control signaling sent by a network device comprises:
receiving, by the terminal device in the first time segment, the first control signaling sent by the network device.

21. The method according to claim 20, wherein the first time segment comprises a first control region of a control region, and the second time segment comprises a second control region of the control region and a data region.

22. The method according to claim 21, wherein the method further comprises:
receiving, by the terminal device in the first control region or the second control region, third control signaling sent by the network device, wherein the third control signaling is used to indicate scheduling information of the terminal device;
determining, by the terminal device based on the third control signaling, a resource block RB resource allocated by the network device to the terminal device;
performing, by the terminal device, listen before talk LBT detection on a frequency segment on which the RB resource is located; and
performing, by the terminal device, uplink transmission based on the transmission bandwidth if the LBT detection succeeds, wherein a subcarrier corresponding to the RB resource is an available subcarrier for uplink transmission of the terminal device, and another subcarrier in the transmission bandwidth is a null subcarrier.

23. A network device, wherein the network device comprises:
a processor, configured to generate first control signaling, wherein the first control signaling is used to indicate a transmission bandwidth in a basic time unit, a frequency resource corresponding to the basic time unit comprises at least one frequency segment, and the transmission bandwidth is a bandwidth of some or all of the at least one frequency segment; and
a transceiver, configured to send the first control signaling to a terminal device.

24. The network device according to claim 23, wherein the frequency resource corresponding to the basic time unit comprises a plurality of frequency segments, the transmission bandwidth is a bandwidth of some or all of the plurality of frequency segments, the basic time unit comprises a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment; and
the transceiver is specifically configured to:
send the first control signaling to the terminal device in the first time segment.

25. The network device according to claim 24, wherein the first time segment comprises a first control region of a control region, and the second time segment comprises a second control region of the control region and a data region.

26. The network device according to claim 25, wherein the transceiver is further configured to:
send second control signaling to the terminal device in the first control region or the second control region, wherein the second control signaling is used to indicate a quantity of OFDM symbols in the control region or a quantity of OFDM symbols in the second control region.

27. A terminal device, wherein the terminal device comprises:
a transceiver, configured to receive first control signaling sent by a network device, wherein the first control signaling is used to indicate a transmission bandwidth in a basic time unit, a frequency resource corresponding to the basic time unit comprises at least one frequency segment, and the transmission bandwidth is a bandwidth of some or all of the at least one frequency segment; and
a processor, configured to control the transceiver to perform data transmission with the network device based on the transmission bandwidth.

28. The terminal device according to claim 27, wherein the frequency resource corresponding to the basic time unit comprises a plurality of frequency segments, the transmission bandwidth is a bandwidth of some or all of the plurality of frequency segments, the basic time unit comprises a first time segment and a second time segment, the first time segment is before the second time segment, a guard interval subcarrier exists between the plurality of frequency segments in the first time segment, and a guard interval subcarrier does not exist between at least some of the plurality of frequency segments in the second time segment; and
the transceiver is specifically configured to:
receive, in the first time segment, the first control signaling sent by the network device.

29. The terminal device according to claim 28, wherein the first time segment comprises a first control region of a control region, and the second time segment comprises a second control region of the control region and a data region.

30. The terminal device according to claim 29, wherein the transceiver is further configured to:
receive, in the first control region or the second control region, third control signaling sent by the network device, wherein the third control signaling is used to indicate scheduling information of the terminal device;
determine, based on the third control signaling, a resource block RB resource allocated by the network device to the terminal device;
perform listen before talk LBT detection on a frequency segment on which the RB resource is located; and
perform, by the terminal device, uplink transmission based on the transmission bandwidth if the LBT detection succeeds, wherein a subcarrier corresponding to the RB resource is an available subcarrier for uplink transmission of the terminal device, and another subcarrier in the transmission bandwidth is a null subcarrier.

31. A computer storage medium, comprising an instruction, wherein when the instruction is run on a computer, the computer is enabled to perform the method according to any one of claims 1 to 18.

32. A computer program product comprising an instruction, wherein when the computer program product is run on a computer, the computer is enabled to perform the method according to any one of claims 1 to 18.

33. A computer storage medium, comprising an instruction, wherein when the instruction is run on a computer, the computer is enabled to perform the method according to any one of claims 19 to 22.

34. A computer program product comprising an instruction, wherein when the computer program product is run on a computer, the computer is enabled to perform the method according to any one of claims 19 to 22.
